# EUROPÄISCHE PATENTSCHRIFT

(11) **EP 0 870 629 B1**
(45) Veröffentlichungstag und Bekanntmachung des Hinweises auf die Patenterteilung: **08.10.2003**
(21) Anmeldenummer: 98105697.1
(22) Anmeldetag: 28.03.1998
(51) Int. Cl.: B60B 21/02, B60C 15/02

(54) **Fahrzeug-Komplettrad**
Complete wheel for vehicle
Roue complète pour véhicule

(30) Priorität: 07.04.1997 DE 19714200
(43) Veröffentlichungstag der Anmeldung: 14.10.1998
(73) Patentinhaber: Continental Aktiengesellschaft, 30165 Hannover (DE)
(72) Erfinder: Huinink, Heinrich, 30823 Garbsen (DE); Sergel, Horst, 30657 Hannover (DE); Knopp, Roland, 30175 Hannover (DE)

(56) Entgegenhaltungen:
- DE-A- 2 937 272
- DE-A- 3 605 803
- DE-A- 3 635 464
- DE-A- 3 732 590
- DE-A- 4 032 645

## Beschreibung

Die Erfindung betrifft eine als Komplettrad zu verwendende Rad/Reifen-Anordnung nach dem Oberbegriff des Patentanspruchs 1 und ein Verfahren zur Herstellung eines Komplettrades.

Reifen sind Verschleißartikel, weil wegen der Abnutzung des Profils nur eine begrenzte Laufleistung der Reifen gegeben ist.

üblicherweise sind Rad und Reifen separate Einheiten, die einzeln erhältlich sind.

Zum Aufziehen eines neuen Reifens auf eine Felge ist es erforderlich, das Rad vom Fahrzeug zu demontieren, den "abgefahrenen" Reifen vom Rad zu entfernen, einen neuen Reifen aufzuziehen, aufzupumpen, das Rad auszuwuchten und wieder an das Fahrzeug zu montieren. Diese diversen Arbeiten werden als Einzelleistungen manuell ausgeführt. Fließbandgemäßes Durchführen oder Rationalisieren der genannten Vorgänge ist nicht möglich. Auch erfordert das Aufziehen des Reifens außer handwerklichem Geschick, Kraft und übung auch das nötige Werkzeug; das Auswuchten des aufgezogenen Reifens erfordert ein Auswuchtgerät und die zur Bedienung des Auswuchtgeräts betreffenden Fachkenntnisse. Aus den genannten Gründen ist das Aufziehen neuer Reifen einerseits lohnintensiv und damit teuer, andererseit können diese Arbeiten aber nicht von einem technisch nicht versierten Fahrzeughalter in Do-ityourself-Manier selbst ausgeführt werden.

Da Fahrzeugräder in Großserie relativ billig herstellbar sind, und weil damit zu rechnen ist, daß die Lohnkosten für die manuelle (individuelle) Ummontage von Reifen und deren Auswuchtung ständig teurer werden, ist insbesondere unter Berücksichtigung von Massenproduktion in Billiglohaländern. davon auszugehen, daß bei einer Gegenüberstellung:
"manuelle Ummontage - Komplettrad" der "Brake-even-point" bezüglich der Kosten bereits jetzt erreicht oder sogar schon überschritten ist.
Auch wäre kein Widerspruch zwischen einem Langzeitreifen und dem erfindungsgemäßen integrierten Rad ersichtlich. Lediglich bei Nobelkarossen, "Oldtimern" und Fahrzeugen mit teuren Aluminiumrädern wird man in absehbarer Zeit auf eine manuelle Ummontage nicht verzichten wollen.

Wenn die Reifen seines Fahrzeugs abgenutzt sind, wird der Fahrzeughalter zukünftig im Supermarkt neue Kompletträder kaufen können, um sie anschließend selbst ans Fahrzeug zu montieren, so wie er bereits jetzt Reserverad oder Winterräder ans Fahrzeug montiert. Das wird in Zukunft so sebstverständlich sein, wie bereits heute das Selbsttanken eine allgemeine Sebstverständlichkeit ist.

Es sind verschiedene Rad/Reifen-Anordnungen bekannt, bei denen die Wülste des Reifens in seitlich am äußeren Umfang des Rades angeordneten Nuten befestigt sind.

Die DE-OS 29 37 272 beschreibt eine solche Luftreifen/Radanordnung, bei der der Luftreifen an der Radfelge dadurch gehalten wird, daß jeweils an den Reifenwänden angeordnete Wülste mit zugeordneten Wulstsitzen in Eingriff stehen. Dabei bestehen die Wulstsitze aus an den Felgenrändern umlaufenden Nuten, die Jeweils eine maulförmig verengte öffnung zur Aufnahme der Enden der Reifenflanken aufweisen. Die Felgen bestehen aus zwei zusammenschraubbaren Teilen, die einen oberen und einen unteren Maulabschnitt bilden. Im zusammengeschraubten Zustand ist die Maulweite geringer als die Wulststärke des Reifens, wodurch ein Herausrutschen des zuvor eingeführten Reifens verhindert wird.

Die DE-OS 36 05 803 A1 beschreibt ebenfalls ein Fahrzeugrad mit einer Felge und einem Luftreifen, wobei die Reifenwülste in seitlich an der Felge angeordneten Nuten untergebracht sind. Die Befestigung des Reifens an der Felge erfolgt hier mit Hilfe eines Klemmringes.

Die deutschen Offenlegungsschriften 37 32 590 A1, 37 33 515 A1 und 38 09 425 A1 beschreiben aus Rad und Reifen bestehende Anordnungen, bei denen die Felgen ebenfalls seitliche Ringnuten zur Aufnahme der Reifenwülste aufweisen und bei denen die Befestigung der in die Nuten eingebrachten Wülste durch Stauchen der als öffnungen dienenden Maulabschnitte der Nuten erfolgt.

Auch gemäß der gattungsbildenden DE-OS 36 01 185 sind die beiden Wülste eines Luftreifens in seitlichen Ringnuten des Felgenkranzes gebettet. Auch hier sind die Maulbereiche enger als die größten Wulstquerschnitte. Die Reifenwülste werden durch Verdrehen bzw. Verformung in die mit verengter öffnung versehenen Nuten eingefädelt. Eine spezielle Reifen/Rad-Befestigung ist nicht vorgesehen.

Die Aufgabe der Erfindung besteht in der Verbindung eines Reifens mit einem Rad zu einem preiswerten Komplettrad.

Wie aus den Patentansprüchen entnehmbar, wird diese Aufgabe dadurch gelöst, daß man einen Reifen und ein mit einer Spezialfelge ausgerüstetes Rad durch Injektion unlösbar miteinander verbindet. Dies macht eine spezielle Felgengeometrie und eine entsprechend angepaßte Reifenkonstruktion erforderlich.

Durch die unlösbare Verbindung des Reifens mit der Felge ist gegenüber herkömmlich montierten Reifen ein verbesserter Pannenlauf gewährleistet.

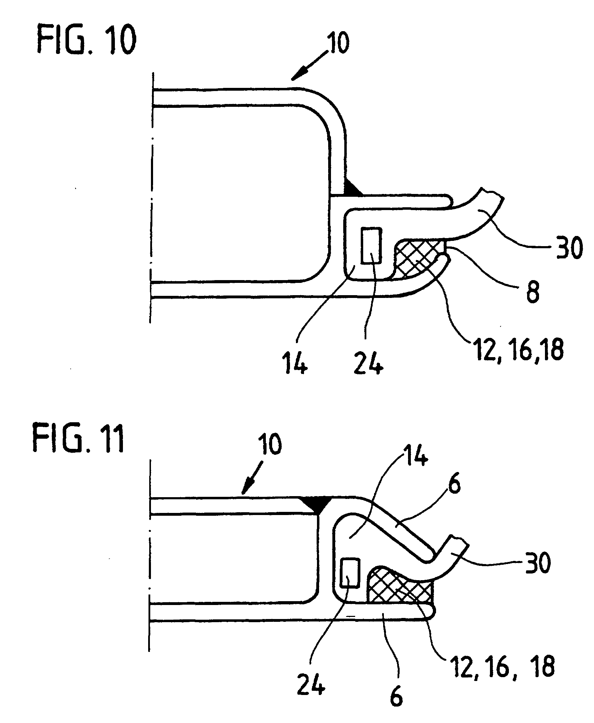

Durch Einsparung des Tiefbetts der Fahrzeugfelge gewinnt man einen vergrößerten Einbauraum für Bremse und Fahrwerksteile.
Bei Verzicht auf einen Stahlkern ergibt sich außer einer weiteren Gewichtseinsparung auch eine nicht unbeträchtliche Materialeinsparung.
Da das im Fahrbetrieb zu verformende Gummivolumen geringer ist, reduziert sich somit auch der Rollwiderstand.
Ein Abwerfen des Reifens ist unmöglich, da Reifen und Felge fest miteinander verbunden sind.
Das erfindungsgemäß integrierte Rad eröffnet vermehrt gestalterische Freiheiten.
Entsprechend einer bevorzugten Weiterbildung der Erfindung ist ein erhöhtes Stützbett vorgesehen mit dem der verbesserte Pannenlauf weiter optimiert werden kann (Fig. 10).
Außerdem besteht die Möglichkeit der TU-Optimierung (Rundlauf / Tire Uniformity). Der Rundlauf des Reifens wird vor der endgültigen Befestigung gemessen. Entsprechend dieser Daten kann der Wulst in der Kammer in axialer Richtung um kleine Wegstrecken verschoben werden, so daß Rundlaufabweichungen ausgeglichen werden.

Das erfindungsgemäße Komplettrad läßt sich auch vorteilhaft an Fahrzeugen mit Luftfedersystem verwenden.

Eine Runderneuerung erfolgt mit dem Komplettrad in der Weise, daß man das Rad in eine Heizform gibt oder eine Kaltrunderneuerung durchführt.

Das Recycling bereitet keine sonderlichen Schwierigkeiten: Zunächst werden Rad und Reifen durch Schneiden oder Fräsen mechanisch voneinander getrennt. Dann werden die Restteile (Stahlrad/Alurad) in den Materialkreislauf zurückgeführt. Auch eine Verwendung in einem "zweiten Leben" ist denkbar. Die Restteile können thermisch oder als Granulat verwertet werden.

Im folgenden wird die Erfindung anhand von Ausführungsbeispielen näher beschrieben:
Die Figuren 1 und 2 zeigen ausschnittsweise verschiedene Ausführungsformen des erfindungsgemäßen Rad/Reifen-Systems.
Die Figuren 3a und 3b zeigen ein alternatives Herstellungsverfahren der erfindungsgemäß unlösbaren Rad/Reifen-Verbindung.
Die Fig. 4 erläutert die Möglichkeit der Verschiebung des Wulstes zur TU-Optimierung.
Die Figuren 5 - 11 zeigen ausschnittsweise Darstellungen von weiteren erfindungsgemäßen Rad/Reifen-Kombinationen.

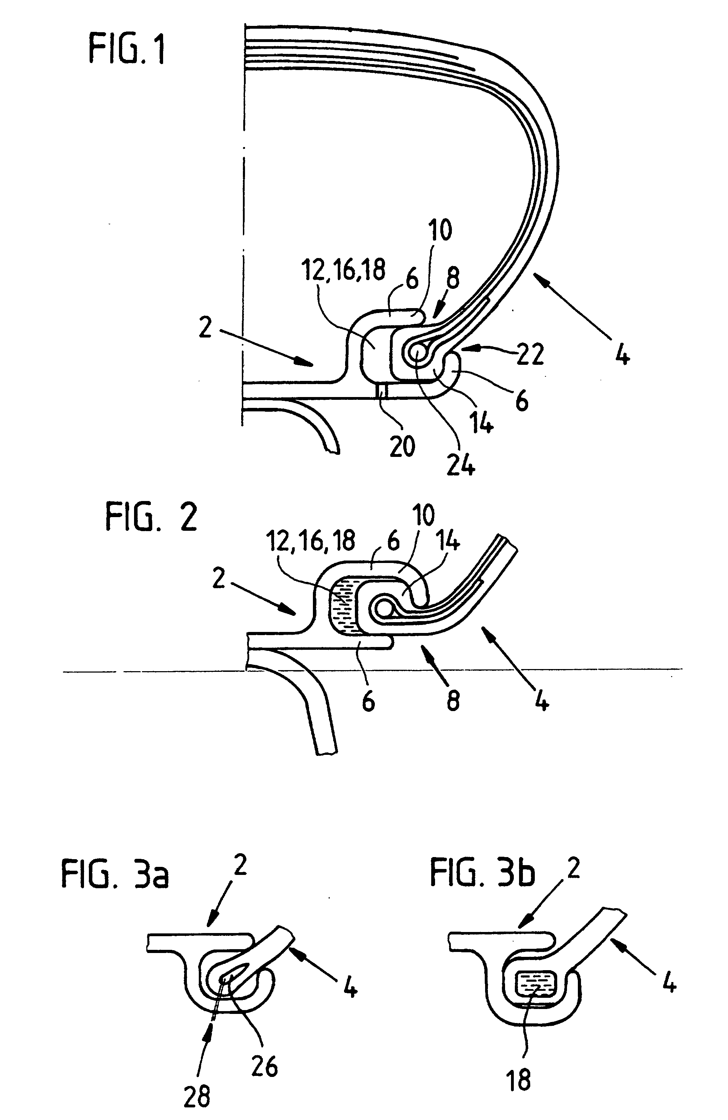

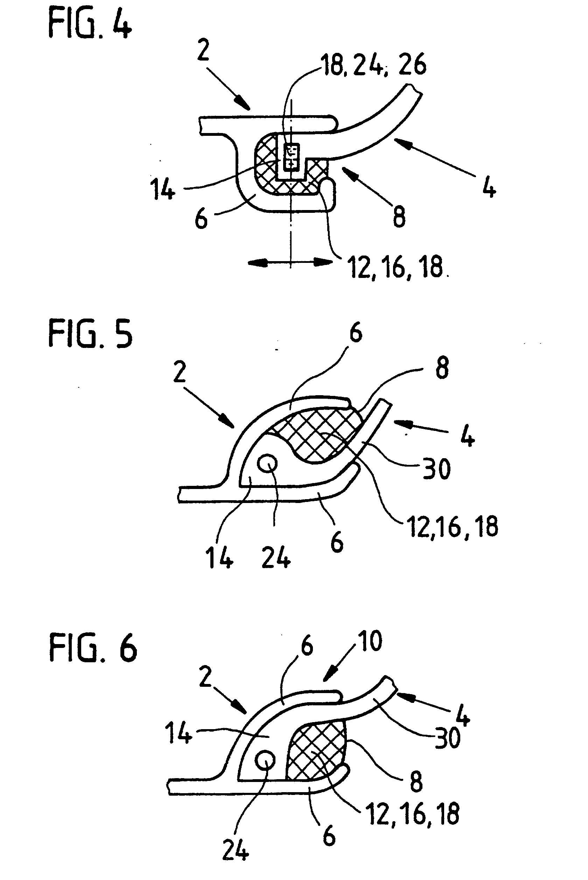

Die in Fig. 1 dargestellte Ausführungsform A der erfindungsgemäßen Rad/Reifen-Kombination umfaßt eine Spezialfelge 2 und einen Spezialreifen 4. (Serienreifen sind nicht verwendbar, da deren Wulstbereich anders gestaltet ist.) Die Felge 2 weist beidseitig ein kreisrundes rohrförmiges Felgenhorn 6 mit jeweils einer seitlichen ringförmigen öffnung 8 auf. Vorzugsweise ist der Querschnitt des rohrförmigen Felgenhorns rechteckig bis quadratisch, mit abgerundeten Kanten (siehe Fig. 5 - 11). Dabei dient die radial nach außen gerichtete Seite des rohrförmigen Felgenhorns 6 als Notlauffläche 10. Die obere (Ausführung A, Fig. 1) oder untere äußere Ecke (Ausführung B, Fig. 2) des rohrförmigen Hohlraums 12 "fehlt", d. h. sie stellt die genannte ringförmige öffnung 8 dar. Die Breite dieser Öffnung 8 ist so eng bemessen, daß der Wulst 14 des Reifens 4 nur in gedrehtem Zustand durch die öffnung 8 in den ringförmigen Hohlraum 12 eingeführt werden kann. Nach Einführung des Wulstes 14 in den Hohlraum 12 dreht sich der zuvor verdrehte Wulst 14 elastisch in seine Ausgangslage zurück und versperrt mit seiner breiten Gestalt die öffnung 8 des Hohlraums 12.

Um sicherzustellen, daß sich der Wulst 14 nicht mehr aus dem ringförmigen Hohlraum 12 herausdrehen kann und um einen festen, unverrückbaren Sitz des Wulstes 14 in dem Hohlraum 12 zu gewährleisten, wird der verbleibende Fugenraum 16 mit flüssigem, aushärtbarem Werkstoff 18 (z. B. Epoxyharz) ausgefüllt. Zu diesem Zweck weist das Felgenhorn 6 eine Füllbohrung 20 an geeigneter Stelle auf. Alternativ kann auch ein Füllen von außen, 22, vorgenommen werden.

Die in den Figuren 3a und 3b abgebildete Ausführungsform stellt eine alternative Möglichkeit zur Arretierung des Wulstes 14 innerhalb des Felgenhorn-Hohlraumes 12 dar. Statt entsprechend der in Fig. 1 dargestellten Auffüllung des restlichen Fugenraumes 16 mit flüssigem, aushärtbarem Werkstoff 18, (wie es bei Wülsten 14 mit herkömmlichem Wulstkern 24 durchgeführt wird), wird hier ein inmitten des Wulstes 14 befindlicher Hohlraum 26 nach dem Einführen des Wulstes 14 in den Felgenhornhohlraum 12 mit flüssigem aushärtbarem Material 18 durch eine unter Druck durchzuführende Injektion 28 so weit aufgefüllt, bis der Wulst 14 den gesamten Hohlraum 12 des Felgenhorns 6 ausfüllt, wodurch ebenfalls ein fester Sitz des Reifens 4 auf der Felge 2 gewährleistet wird.

Die in den Figuren 5 - 11 ausschnittsweise gezeigten Darstellungen von Rad/Reifen-Kombinationen stellen weitere Ausführungsvarianten des erfindungsgemäßen Konzeptes dar. Gegenüber den in den Figuren 1 und 2 dargestellten Felgen ist bei den Felgen der Figuren 5 - 11 die Lage und damit die Funktion des Füllmaterials anders:
Das Füllmaterial verringert den Querschnitt der offenen Seite des Hohlraumes und verhindert somit das Herausrutschen des Reifenwulstes aus dem Hohlraum.

Die Figuren 2, 5 und 7 zeigen Ausführungen, die durch die Gestaltung des rohrförmigen Felgenhorns und des Reifenwulstes ein erhöhtes Pannenlaufpotential ohne zusätzliches Stützbett aufweisen.

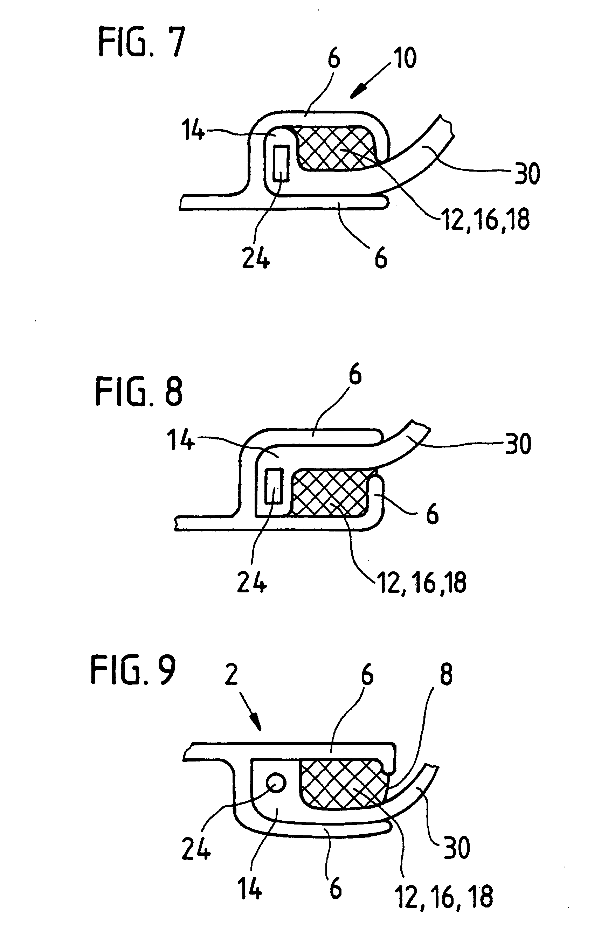

Außer entsprechend Fig. 9 wird bei den hier dargestellten Ausführungsformen nicht der Wulst 14 verdreht, um ihn in die Aushöhlung 12 des Felgenhorns 6 einzuführen. Statt dessen wird hier die Reifenflanke 30 leicht umgebogen, so daß der mehr oder weniger quer ausgebildete Wulst 14 längs durch die öffnung 8 in die Höhlung 12 des Felgenhorns 6 eingeführt werden kann. Dabei sind die Querschnitte von Wulst 14 und lichter Weite des Felgenhorns 6 so gestaltet, daß entweder eine Umbiegung der Reifenflanke 30 mehr nach innen oder eine Umbiegung mehr nach außen ein leichteres Einführen des Wulstes 14 in den Hohlraum 12 ermöglicht. Bei allen gezeigten Beispielen ist der Querschnitt des Hohlraums 12 und der Querschnitt des Wulstes 14 so ausgebildet, daß der Wulst 14 eine möglichst große Berührungslänge mit der Innenfläche des Hohlraumes 12 aufweist. So wird eine weitgehend definierte Position des Reifens 4 in Bezug zur Felge 2 vorgegeben. Der restliche freie Hohlraum (Fugenraum) 16 wird mit einem aushärtbaren Material 18 aufgefüllt.

Bei der in Fig. 9 dargestellten Ausführungsform zeigt der abgebildete Pfeil die Füllrichtung an.

Die Herstellung des beschriebenen Komplettrades geschieht erfindungsgemäß folgendermaßen:
Der quer ausgebildete Wulst 14 wird in Längsrichtung gedreht. Dann wird der derartig längsgedrehte Wulst 14 in die ringförmige öffnung (Fuge) 8 des rohrförmigen Felgenhornhohlraumes 12 eingeführt, wo er sich aufgrund der elastischen Vorspannung wieder in seine ursprüngliche Querlage zurückdrehen kann. Der in dem Hohlraum 12 des Felgenhorns 6 verbleibende Fugenraum 16 wird mit flüssigem aushärtbarem Werkstoff 18 (z. B. Epoxyharz) aufgefüllt. Bis zur Aushärtung des eingefüllten Werkstoffes 18 kann die Position des Wulstes 14 in dem Felgenhornhohlraum 12 entlang dem Felgenumfang zwecks Optimierung der Auswuchtung verändert werden (Fig. 4).

Nach einer alternativen Ausführungsform der Erfindung wird die Arretierung des Reifens 4 in der Felge 2 nicht durch Auffüllen des verbleibenden Fugenraumes 16 (siehe z. B. Fig. 1) durchgeführt. Statt des Auffüllens des Fugenraumes 16 wird vielmehr ein erfindungsgemäßer Wulstkernhohlraum 26 durch Injektion 28 eines flüssigen aushärtbaren Werkstoffes 18 (wie z. B. Epoxyharz, hochmoduliges Polymer, Thermoplast oder Metall mit niedrigem Schmelzpunkt) unter Druck soweit aufgefüllt, daß der Wulst 14 den Felgenhornhohlraum 12 gänzlich ausfüllt und kein freier Fugenraum 16 mehr verbleibt.

### Bezugszeichenliste

- 2: (Spezial)felge
- 4: (Spezial)reifen
- 6: rohrförmiges Felgenhorn
- 8: ringförmige Öffnung (Fuge)
- 10: Notlauffläche
- 12: Hohlraum des Felgenhorns
- 14: Wulst
- 16: (verbleibender) Fugenraum
- 18: flüssiger aushärtbarer Werkstoff
- 20: Füllbohrung
- 22: "Füllen von außen"
- 24: Wulstkern
- 26: (Wulstkern-)Hohlraum
- 28: "Injektion"
- 30: Reifenflanke
- 32: freies Ende des Felgenhorns

## Patentansprüche

1. Fahrzeug-Komplettrad
mit einer Spezialfelge (2) und
mit einem mit Wulst (14) ausgestatteten Spezialreifen (4),
wobei die Felge (2) beidseitig ein kreisrundes Felgenhorn (6) aufweist,
das zur Aufnahme des Wulstes (14) einen mit einer ringförmigen öffnung (8) versehenen rohrförmigen Hohlraum (12) mit vorzugsweise rechteckigem bis quadratischem Querschnitt bildet,
wobei die Breite dieser öffnung (8) so eng bemessen ist,
daß der Wulst (14) des Reifens (4) nur im längsgedrehten Zustand durch die öffnung (8) in den ringförmigen Hohlraum (12) eingeführt werden kann,
**dadurch gekennzeichnet,**
**daß** der nach Einfügen des Reifenwulstes (14) in dem rohrförmigen Hohlraum (12) des Felgenhorns (6) verbleibende Fugenraum (16) mit flüssigem aushärtbarem Werkstoff (18) aufgefüllt ist.

2. Fahrzeug-Komplettrad
mit einer Spezialfelge (2) und
mit einem mit Wulst (14) ausgestatteten Spezialreifen (4),
wobei die Felge (2) beidseitig ein kreisrundes Felgenhorn (6) aufweist,
das zur Aufnahme des Wulstes (14) einen mit einer ringförmigen Öffnung (Fuge) (8) versehenen rohrförmigen Hohlraum (12) mit vorzugsweise rechteckigem bis quadratischem
Querschnitt bildet,
**dadurch gekennzeichnet,**
**daß** nach Einfügen des Reifenwulstes (14) in den rohrförmigen Hohlraum (12) ein Wulstkernhohlraum (26) durch Injektion (28) eines flüssigen aushärtbaren Werkstoffes (18) unter Druck soweit aufgefüllt ist,
**daß** der Wulst (14) den Felgenhornhohlraum (12) gänzlich ausfüllt und kein freier Fugenraum (16) mehr verbleibt.

3. Fahrzeug-Komplettrad nach Anspruch 1 oder 2,
**dadurch gekennzeichnet,**
**daß** der flüssige aushärtbare Werkstoff (18) Epoxyharz, hochmoduliges Polymer, flüssiger Kunststoff oder Metall mit niedrigem Schmelzpunkt ist.

4. Fahrzeug-Komplettrad nach einem der Ansprüche 1 bis 3,
**dadurch gekennzeichnet,**
**daß** die radial nach außen gerichtete Seite des rohrförmigen Felgenhornes (6) als erhöhtes Stützbett ausgebildet ist, wodurch es als Notlauffläche (10) dient.

5. Verfahren zur Herstellung einer aus Rad mit Spezialfelge (2) und Spezialreifen (4) bestehender Rad/Reifen-Anordnung nach einem der Ansprüche 1 - 4, **gekennzeichnet durch**
folgende Verfahrensschritte:
a) der breit geformte Wulst (14) des Reifens (4) wird **durch** Verdrehen der Breitseite gedreht;
b) der derartig längsgedrehte Wulst (14) wird in die ringförmige öffnung (Fuge) (8) des rohrförmigen Felgenhorn-Hohlraums (12) eingeführt, (wo er sich aufgrund der elastischen Vorspannung wieder in seine ursprüngliche Breite zurückdrehen kann);
c1) der in dem Hohlraum (12) des Felgenhorns (6) verbleibende Fugenraum (16) wird **durch** eine Füllbohrung (20) oder **durch** die ringförmige Fuge (8) mit flüssigem aushärtbarem Werkstoff (18) aufgefüllt; oder
c2) ein Wulstkern-Hohlraum (26) wird **durch** Injektion (28) mit flüssigem aushärtbarem Werkstoff (18) unter Druck so weit aufgefüllt, bis der Wulst (14) den Felgenhornhohlraum (12) gänzlich ausfüllt und kein freier Fugenraum (16) mehr verbleibt;
d) vor Aushärtung des eingeführten Werkstoffs (18) wird die Position des Wulstes (14) in dem Felgenhorn-Hohlraum (12) entlang des Felgenumfangs zwecks Optimierung des Rundlaufs justiert.

## Claims

1. Complete vehicle wheel assembly, having a special rim (2) and a special tyre (4), which is provided with bead (14), the rim (2) having a circular rim flange (6) on each side, which rim flange forms a tubular cavity (12) for the accommodation of the bead (14), said cavity being provided with an annular opening (8) and preferably having a rectangular to square cross-section, the width of this opening (8) being of such narrow dimensions that the bead (14) of the tyre (4) can only be introduced through the opening (8) into the annular cavity (12) in the longitudinally rotated state, **characterised in that** the gap (16), which remains after the tyre bead (14) has been fitted in the tubular cavity (12) of the rim flange (6), is filled with liquid hardenable material (18).

2. Complete vehicle wheel assembly, having a special rim (2) and a special tyre (4), which is provided with bead (14), the rim (2) having a circular rim flange (6) on each side, which rim flange forms a tubular cavity (12) for the accommodation of the bead (14), said cavity being provided with an annular opening (gap) (8) and preferably having a rectangular to square cross-section, **characterised in that**, after the tyre bead (14) has been inserted into the tubular cavity (12), a bead core cavity (26) is filled by the injection (28) of a liquid hardenable material (18) under pressure to such an extent that the bead (14) completely fills the rim flange cavity (12), and there is no longer any free gap (16) remaining.

3. Complete vehicle wheel assembly according to claim 1 or 2, **characterised in that** the liquid hardenable material (18) is epoxy resin, high-modular polymer, liquid plastics material or metal with a low melting point.

4. Complete vehicle wheel assembly according to one of claims 1 to 3, **characterised in that** the radially outwardly orientated side of the tubular rim flange (6) is in the form of a raised supporting bed, whereby it serves as an emergency running surface (10).

5. Method of producing a wheel/tyre arrangement, which comprises a wheel with a special rim (2) and a special tyre (4), according to one of claims 1 - 4, **characterised by** the following method steps:
a) the wide bead (14) of the tyre (4) is rotated by twisting the wide side;
b) the bead (14), which has thus been longitudinally rotated, is introduced into the annular opening (gap) (8) of the tubular rim flange cavity (12) (where it can rotate back again into its original width because of the resilient initial tension);
c1) the gap (16), remaining in the cavity (12) of the rim flange (6), is filled with liquid hardenable material (18) through a filling bore (20) or through the annular gap (8); or
c2) a bead core cavity (26) is filled with liquid hardenable material (18) by injection (28) under pressure to such an extent until the bead (14) completely fills the rim flange cavity (12), and there is no longer any free gap (16) remaining;
d) prior to the hardening of the introduced material (18), the position of the bead (14) in the rim flange cavity (12) is adjusted along the rim periphery in order to optimise the concentricity.

## Revendications

1. Roue complète de véhicule comprenant une jante spéciale (2) et un pneumatique spécial (4) comportant un talon (14), où la jante (2) comprend, des deux côtés, un rebord de jante (6) circulaire qui, pour loger le talon (14), forme un espace creux (12), de préférence de section rectangulaire ou carrée, ayant une forme tubulaire et comportant une ouverture (8) de forme annulaire, où la largeur de cette ouverture (8) est dimensionnée de façon si étroite, que le talon (14) du pneumatique (4) ne peut être introduit, par l'ouverture (8), dans l'espace creux (12) de forme tubulaire, seulement en étant tourné longitudinalement,
**caractérisée,**
**en ce que** l'espace intermédiaire (16), qui reste après l'introduction du talon (14) du pneumatique dans l'espace creux (12) du rebord de jante (6), de forme tubulaire, est rempli d'un matériau (18) durcissable liquide.

2. Roue complète de véhicule comprenant une jante spéciale (2) et un pneumatique spécial (4) comportant un talon (14), où la jante (2) comprend, des deux côtés, un rebord de jante (6) circulaire qui, pour loger le talon (14), forme un espace creux (12), de préférence de section rectangulaire ou carrée, ayant une forme tubulaire et comportant une ouverture (joint) (8) de forme annulaire, **caractérisée en ce que**, après l'introduction du talon (14) du pneumatique dans l'espace creux (12) de forme tubulaire, un espace creux (26) de la tringle est rempli, sous pression, par injection (28) d'un matériau (18) durcissable liquide, de manière telle que le talon (14) remplit complètement l'espace creux (12) du rebord de jante et il ne subsiste plus aucun espace intermédiaire libre (16).

3. Roue complète de véhicule selon la revendication 1 ou 2, **caractérisée en ce que** le matériau (18) durcissable liquide est de la résine époxyde, un polymère à haut module, une matière plastique liquide ou un métal à point de fusion bas.

4. Roue complète de véhicule selon l'une quelconque des revendications 1 à 3, **caractérisée en ce que** le côté du rebord de jante (6) de forme tubulaire, tourné vers l'extérieur dans le sens radial, est conçu comme un fond d'appui relevé qui sert de bande de roulement de secours (10).

5. Procédé de fabrication d'un ensemble roue / pneumatique se composant d'une roue comprenant une jante spéciale (2) et un pneumatique spécial (4) selon l'une quelconque des revendications 1 à 4, **caractérisé par** les étapes suivantes consistant :
a) à faire en sorte que le talon (14) du pneumatique (4), formé en étant large, soit tourné par torsion du côté large ;
b) à faire en sorte que le talon (14) ainsi tourné longitudinalement soit introduit dans l'ouverture (joint) (8), de forme annulaire, de l'espace creux (12) du rebord de jante, de forme tubulaire, où le talon, en raison de la précontrainte élastique, peut revenir à sa largeur d'origine ;
c1) à faire en sorte que l'espace intermédiaire (16), qui reste dans l'espace creux (12) du rebord de jante (6), soit rempli d'un matériau (18) durcissable liquide passant par un trou de remplissage (20) ou par le joint (8) de forme annulaire ; ou
c2) à faire en sorte qu'un espace creux (26) de la tringle soit rempli, sous pression, par injection (28) d'un matériau (18) durcissable liquide, de manière telle que le talon (14) remplisse complètement l'espace creux (12) du rebord de jante et qu'il ne subsiste plus aucun espace intermédiaire libre (16) ;
d) à faire en sorte, avant durcissement du matériau introduit (18), que la position du talon (14), pour obtenir une optimisation de la concentricité, soit ajustée dans l'espace creux (12) du rebord de jante, le long de la circonférence de la jante.
